# EUROPÄISCHE PATENTSCHRIFT

(11) **EP 4 048 613 B1**
(45) Veröffentlichungstag und Bekanntmachung des Hinweises auf die Patenterteilung: **10.07.2024**
(21) Anmeldenummer: 20746152.6
(22) Anmeldetag: 22.07.2020
(51) Int. Cl.: B65G 47/52, B65G 67/20, B66F 9/06

(54) **VERLADESYSTEM ZUM BELADEN UND ENTLADEN VON LKW**
LOADING SYSTEM FOR LOADING AND UNLOADING TRUCKS
SYSTÈME DE CHARGEMENT POUR CHARGER ET DÉCHARGER DES CAMIONS

(30) Priorität: 25.10.2019 DE 102019128916
(43) Veröffentlichungstag der Anmeldung: 31.08.2022
(73) Patentinhaber: TRAPO GmbH, 48712 Gescher (DE)
(72) Erfinder: MÖLLMANN, Erik, 46414 Rhede (DE); NIEHAVES, Tobias, 46395 Bocholt (DE); KUGEL, Volker, 59269 Beckum (DE); KURTENBACH, Dr. Stefan, 46514 Schermbeck (DE); PARIS, Jascha, 48151 Münster (DE)
(74) Vertreter: Lenzing Gerber Stute
(86) Internationale Anmeldenummer: PCT/EP2020/070709
(87) Internationale Veröffentlichungsnummer: WO 2021/078417

(56) Entgegenhaltungen:
- DE-A1- 19 539 563
- DE-U1- 9 301 545
- JP-A- 2018 043 879
- JP-A- S6 031 445
- JP-A- S63 222 969
- US-A- 4 508 484
- US-A1- 2005 053 451

## Beschreibung

Die vorliegende Erfindung betrifft ein Verladesystem zum Beladen und Entladen von Laderäumen von Lkw mit den Merkmalen des Oberbegriffs des Anspruchs 1.

In der Logistik wird zur Verkürzung der Standzeiten von Lkw beim Be- und Entladen angestrebt, auf Paletten befindliches Transportgut möglichst schnell aus einem Lager in den Laderaum des Lkw zu befördern. Unter Lkw soll im vorliegenden Zusammenhang der Laderaum eines Lastkraftwagens verstanden werden, der beispielsweise als Auflieger eines Sattelschleppers, als Absetzbrücke oder als Container ausgebildet sein kann. Lastkraftwagen werden zu Beladen und Entladen üblicherweise rückwärts mit der rückwärtigen Öffnung des Laderaums an eine Rampe herangefahren, an der dann Paletten bereitgestellt und in den Laderaum befördert werden.

Eine Möglichkeit zur Beladung besteht darin, Paletten einzeln mit Hubwagen oder Gabelstaplern in den Lkw zu befördern. Dabei werden rechteckige Paletten mit einheitlichen Abmessungen entweder längs oder quer nebeneinander abgestellt. Bei sogenannten Europaletten können drei Paletten in Längsrichtung, also mit den Schmalseiten in Fahrtrichtung des Lkw, oder zwei Paletten in Querrichtung, also mit den Langseiten in Fahrtrichtung des Lkw, nebeneinander abgestellt werden.

Aus dem deutschen Patent DE 3709835 C2 ist eine Be- und Entladestation für Lastkraftwagen und Container bekannt, bei der Paletten jeweils in Reihen zu drei Paletten nebeneinander auf einen den Abmessungen des Laderaumbodens entsprechenden Kettenförderer gestellt werden, bis die gesamte Ladung des Lkw auf dem Kettenförderer bereitgestellt ist. Sodann wird der Kettenförderer ganz in den Laderaum hineingefahren, wobei er sich auf dem Boden des Lkw abstützt. Der Kettenförderer wird dann in Betrieb gesetzt, um die Ladung in Fahrtrichtung des Lkw nach vorne zu bewegen und dabei die jeweils vordere Reihe von Paletten abzusetzen. Simultan wird der Kettenförderer rückwärts aus dem Laderaum heraus bewegt, und zwar mit derselben Geschwindigkeit, mit der die Paletten auf dem Kettenförderer vorwärts bewegt werden. Dadurch bewegen sich die Paletten im Wesentlichen nicht gegenüber dem Laderaum und werden eine Reihe nach der anderen dort abgesetzt, solange bis der Kettenförderer ganz aus dem Laderaum herausgefahren ist und die letzte Reihe von Paletten auf dem Boden des Laderaums abgestellt wurde. Bei dieser Anlage wird die gesamte Ladung des Lkw auf dem Kettenförderer bereitgestellt, bevor der Ladevorgang beginnt. Entsprechend ist der Platzbedarf dieser Anlage an der Rampe des Logistiklagers relativ groß und das Beladen des Kettenförderers vor dem Beginn des Ladevorgangs in den Laderaum des Lkw ist zeitaufwändig, da das Beladen des Kettenförderers abgeschlossen sein muss, bevor die Paletten in den Laderaum befördert werden können.

Aus der europäischen Patentanmeldung mit der Veröffentlichungsnummer EP 1 946 963 A1 ist ein Auflieger eines Lkw bekannt, der am Boden seines Laderaums mit parallel in Längsrichtung des Aufliegers angeordneten Kettenförderern ausgestattet ist. Dabei sind die Kettenförderer so angeordnet, dass insgesamt drei Paletten nebeneinander auf den Förderern aufstehen können. Zum Beladen werden jeweils drei Paletten nebeneinander hinten auf den Boden des Laderaums aufgesetzt und dann durch den im Auflieger eingebauten Kettenförderer nach vorne befördert, bis der gesamte Laderaum gefüllt ist. Zum Entladen können die Paletten dann wieder mithilfe des Kettenförderers nach hinten zur Öffnung des Laderaums transportiert und dort mit einem Gabelstapler abgenommen werden. Für dieses System ist es erforderlich, den jeweiligen Auflieger mit einem eigenen Kettenförderer auszustatten, der sich über die gesamte Länge des Laderaums erstreckt und einen eigenen Antrieb aufweist. Das System ist entsprechend aufwändig.

Es ist deshalb Aufgabe der vorliegenden Erfindung, ein System zum Beladen und Entladen eines Laderaums eines Lastkraftwagens zu schaffen, das flexibler in der Handhabung ist, das ohne Umbauten des Laderaums realisiert werden kann und das im Rampenbereich des Logistiklagers einen geringeren Platzbedarf aufweist. US 4 508 484 A offenbart ein Verladesystem gemäß dem Oberbegriff des Anspruchs 1.

Diese Aufgabe wird von einem System mit den Merkmalen des Anspruchs 1 gelöst.

Weil bei einem Verladesystem zum Beladen und Entladen von Laderäumen von Lkw, mit einer Anordnung von Kettenförderern, die parallel zueinander ausgerichtet sind und so angeordnet sind, dass Standardpaletten auf den Kettenförderern in einer Förderrichtung hin und her bewegt werden können, weiter ein autonomes selbstfahrendes Förderfahrzeug mit wenigstens einem lenkbaren Rad als Komponente des Verladesystems vorgesehen ist, und die Kettenförderer in einer Höhe über einem Boden so angeordnet sind, dass unterhalb der Kettenförderer das Förderfahrzeug mit vertikal verfahrbaren Palettengabeleinheiten positionierbar ist, können auf den Kettenförderern stehende Paletten mittels der Palettengabeleinheiten angehoben werden und den Laderaum eines bereitstehenden Lkw gefahren werden.

Wenn das Förderfahrzeug drei Palettengabeleinheiten mit jeweils zwei parallelen und beabstandeten Palettengabeln aufweist, können jeweils drei Paletten in einer Reihe nebeneinander aufgenommen und transportiert werden.

Vorzugsweise weist das Verladesystem insgesamt sechs parallele Kettenförderer in drei Paaren auf, von denen jeweils ein Paar von benachbarten Kettenförderer einen Abstand von 0,5m bis 0,7m voneinander aufweist.

Wenn in Förderrichtung stromaufwärts vor dem Kettenförderer ein Rollenförderer mit Rollen mit quer zu der Förderrichtung ausgerichteten Drehachsen vorgesehen ist, kann dort eine Reihe von Paletten abgestellt und falls erforderlich ausgerichtet werden, bevor diese Paletten auf den Kettenförderer übergeben werden. Dazu ist es vorteilhaft, wenn die Rollen zumindest zum Teil bremsbar und antreibbar sind. Außerdem ist es vorteilhaft, eine Ausrichthilfe parallel zu den Rollen anzuordnen.

In einer bevorzugten Ausführungsform ist der Rollenförderer mit quer zu der Förderrichtung arbeitenden Kettenförderern ausgestattet, die zum Umsetzen der Paletten auf dem Rollenförderer eingerichtet sind. So können die Paletten zusammengerückt und in Querrichtung genau auf die stromabwärts angeordneten Kettenförderer ausgerichtet werden.

Vorteilhaft sind Messsäulen mit Sensoren zur Vermessung einer nicht zu dem Verladesystem gehörenden Laderaumöffnung vorgesehen, damit Daten zur relativen Positionierung der Laderaumöffnung zu dem Verladesystem ermittelt werden können.

Das Förderfahrzeug weist vorzugsweise wenigstens einen Antrieb, wenigstens eine Hubeinheit und eine Steuerung auf, die ein autonomes Fahren des Förderfahrzeugs sowie Aufnahme, Transport und Absetzen der Last ermöglichen.

Dazu ist vorzugsweise das Förderfahrzeug selbst mit Sensoren zur Navigation innerhalb eines Laderaums ausgestattet.

Für einen weitgehend autonomen Betrieb ist es von Vorteil, wenn das Förderfahrzeug einen Akkumulator zur Stromversorgung des Antriebs, der Hubeinheiten und der Steuerung aufweist, der mittels einer elektrischen Kupplung oder induktiv in dem Verladesystem elektrisch aufgeladen werden kann. Das Aufladen erfolgt vorzugsweise in einer Ruhestellung unterhalb der Kettenförderer.

Eine besonders hohe Betriebssicherheit mit verringerter Kollisionsgefahr zwischen den Paletten und dem Förderfahrzeug wird erzielt, wenn das Förderfahrzeug in einer Ruhe- oder Bereitschaftsstellung mit abgesenkten Palettengabeleinheiten nicht nach oben über die Kettenförderer hinausragt.

In einer bevorzugten Ausführungsform ist das Verladesystem auf einer Grundplatte montiert, die einerseits die genaue Ausrichtung der Komponenten zueinander gewährleistet, die andererseits aber auch selbst auf Rollen oder auf einem Schienensystem quer zu der Förderrichtung verfahrbar gelagert sein kann. Dadurch ist es möglich, das Verladesystem innerhalb eines Logistikgebäudes parallel zu der Rampe zu verschiedenen benachbarten Toren zu verfahren.

Nachfolgend wird ein Ausführungsbeispiel der Erfindung anhand der Zeichnung näher beschrieben. Es zeigen:
- Figur 1:: ein selbstfahrendes Förderfahrzeug für ein Verladesystem in einer Seitenansicht mit abgesenkten Palettengabeleinheiten;
- Figur 2:: das Förderfahrzeug aus Figur 1 mit angehobenen Palettengabeleinheiten;
- Figur 3:: das Verladesystem im Ruhezustand in einer perspektivischen Darstellung;
- Figur 4:: das Verladesystem aus Figur 3 mit einer aufgesetzten Reihe von drei Paletten und einem mit der Laderaumöffnung an das Verladesystem herangefahrenen Auflieger;
- Figur 5:: das Verladesystem aus Figur 4, bei dem die Reihe von Paletten in Richtung auf den Auflieger verfahren wurde;
- Figur 6:: das Verladesystem aus Figur 4 und Figur 5, bei dem die Paletten von dem Förderfahrzeug angehoben und von den Kettenförderern abgenommen sowie in Richtung auf die Laderaumöffnung verfahren wurden; sowie
- Figur 7:: das Verladesystem aus Fig. 4 bis 6, bei dem das Förderfahrzeug mit den drei Paletten ganz in den Laderaum des Aufliegers hineingefahren ist und die Paletten dort abgesetzt hat.

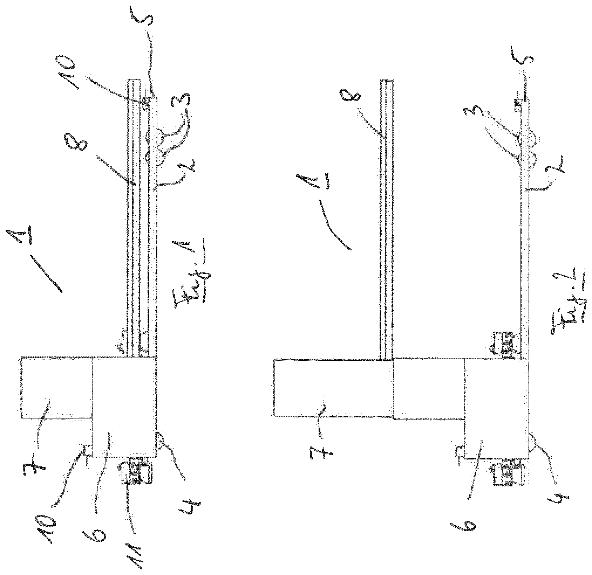

Die Figur 1 zeigt ein selbstfahrendes Förderfahrzeug 1 als Teil des hier zu beschreibenden Verladesystems in einer Seitenansicht. Das Förderfahrzeug 1 weist ein Fahrgestell 2 mit Stützrollen 3 und gelenkten Antriebsrädern 4 auf, wobei die Stützrollen 3 an Auslegern 5 montiert sind, die von einem Antriebsblock 6 weg weisen. Der Antriebsblock 6 beinhaltet die hier nicht dargestellten Elemente zur Steuerung, zum Antrieb und Batterien zur Energiespeicherung für den Betrieb des Förderfahrzeug 1. Außerdem trägt der Antriebsblock 6 eine Anzahl von Hubeinheiten 7, die mit Palettengabeleinheiten 8 verbunden sind und die so eingerichtet sind, dass sie in Abhängigkeit von einer Steuerung die Palettengabeleinheiten 8 anheben und absenken können, und zwar mitsamt einer darauf eventuell befindlichen Last. Die Palettengabeleinheiten 8 sind in der Figur 1 in abgesenktem Zustand dargestellt. Die Höhe der Oberseite der Palettengabeleinheiten 8 über der Aufstandsfläche entspricht dabei der lichten Höhe unter einer Standardpalette für die Logistik.

Das Förderfahrzeug 1 ist außerdem mit Sensoren 10 und zusätzlichen Sicherheitssensoren 11 ausgestattet, die für die selbstständige Navigation das Förderfahrzeug 1 die nötigen Informationen liefern. Weiter ist eine Kupplung an der in Fahrtrichtung hinteren Seite vorgesehen, die zur Aufladung des Energiespeichers dient, wenn das Förderfahrzeug 1 in der Ruheposition an dem Verladesystem angedockt ist.

In der Figur 2 ist das Förderfahrzeug 1 in einer Ansicht entsprechend Figur 1 dargestellt. In der Figur 2 sind die Hubeinheiten 7 mitsamt den daran befestigten Palettengabeleinheiten 8 angehoben.

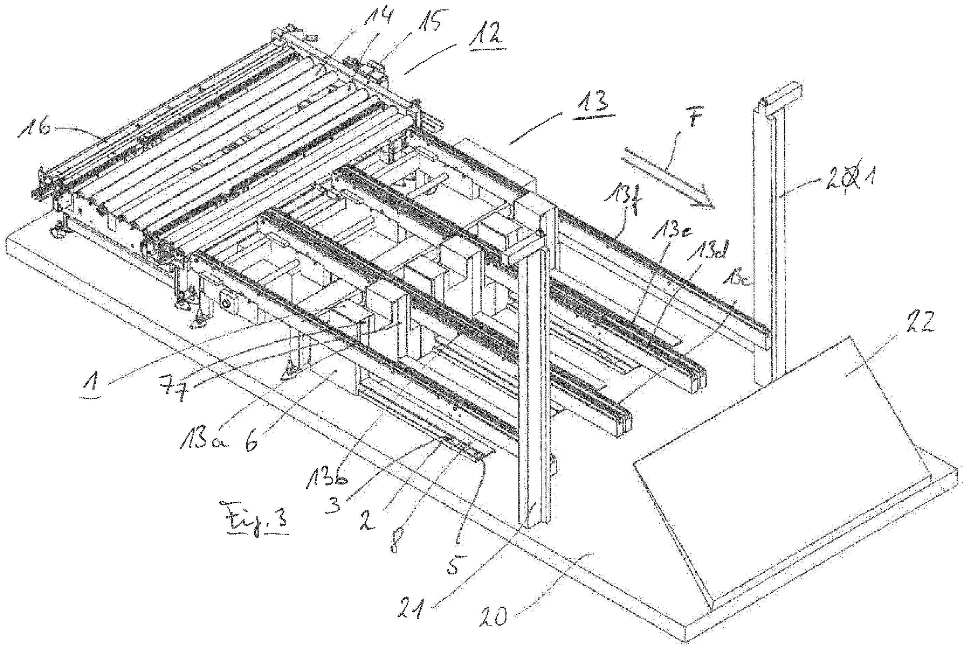

In der Figur 3 ist ein Ausführungsbeispiel eines Verladesystems im Ruhezustand perspektivisch dargestellt. Das Verladesystem umfasst das Förderfahrzeug 1 sowie einen Rollenförderer, der insgesamt mit der Bezugsziffer 12 bezeichnet ist, und eine Kettenfördereranordnung 13 mit einer Anzahl von Kettenförderern 13a bis 13f. Eine Förderrichtung F ist in der Figur 3 mit einem Pfeil gekennzeichnet. Zum Beladen von Lkw wird in Förderrichtung F gefördert, beim Entladen eines Lkw wird die Ladung entgegen der Förderrichtung F befördert.

Der Rollenförderer 12 weist eine Anzahl von Rollen 14 auf, deren Drehachsen quer zur Förderrichtung F ausgerichtet sind. Die Rollen 14 sind zumindest teilweise gebremst und antreibbar, sodass Stückgut in Form von Paletten sicher auf den Rollen 14 abgestellt werden kann. Antriebsmittel 15 sind zum Antreiben der Rollen 14 vorgesehen. Weiter ist eine rückwärtige Ausrichthilfe 16 parallel zu den Rollen 14 vorgesehen, die vorzugsweise im Betrieb angehoben und abgesenkt werden kann. Im Rollenförderer 12 sind mindestens zwei, vorzugsweise jedoch drei vertikal bewegliche Kettenförderer integriert, um den Abstand zwischen den Paletten regulieren zu können und eine zweite Förderrichtung quer zur Förderrichtung F zu realisieren.

In Förderrichtung F anschließend an den Rollenförderer 12 sind die Kettenförderer 13 angeordnet. Deren Ausrichtung ist so gewählt, dass sie parallel zu der Förderrichtung F in beiden Richtungen antreibbar sind. Im Detail sind insgesamt sechs einzelne Förderketten 13a bis 13f vorgesehen, von denen die Förderketten 13a und 13b einen Abstand zwischen 0,5 m und 0,7 m voneinander aufweisen, so dass die gesamte Breite der beiden Kettenförderer der Breite einer Standardpalette entspricht. Die Förderkette 13c ist unmittelbar neben der Förderkette 13b angeordnet. Der Abstand der Förderketten 13c und 13d voneinander entspricht wieder der Breite einer Standardpalette. Die Förderkette 13e ist unmittelbar neben der Förderkette 13d angeordnet. Der Abstand der Förderketten 13e und 13f schließlich entspricht wieder der Breite einer Standardpalette. Insgesamt können also drei Paletten in Längsrichtung auf den Kettenförderer 13 aufgesetzt und dort parallel gleichzeitig transportiert werden.

Das Förderfahrzeug 1 ist in der Ruheposition unterhalb des Kettenförderers 13 dargestellt. In dieser perspektivischen Darstellung ist ersichtlich, dass das Förderfahrzeug 1 aus insgesamt drei Modulen besteht, die jeweils ein eigenes Fahrgestell 2 und eine eigene Palettengabeleinheit 8 sowie zwei der Palettengabeleinheit 8 zugeordnete Hubmodule 7 aufweisen.

Das Verladesystem ist auf einem Boden, hier in Form einer Grundplatte 20 angeordnet, die rechts und links (in Richtung der Förderrichtung F gesehen) jeweils eine Messsäule 21 trägt. Die Messsäulen 21 sind mit einer Anzahl von nicht näher dargestellten Sensoren versehen und dazu eingerichtet, die genaue Position der Laderaumöffnung auszumessen, sobald ein Lkw an die Rampe herangefahren ist. Weiter trägt die Grundplatte 20 eine Klappe 22, die im Betrieb in Förderrichtung F heruntergeklappt werden kann, sobald eine Laderaumöffnung bereitsteht. Die Klappe 22 überbrückt einen Abstand und gegebenenfalls eine Höhendifferenz zwischen der Laderaumöffnung und der Grundplatte 20.

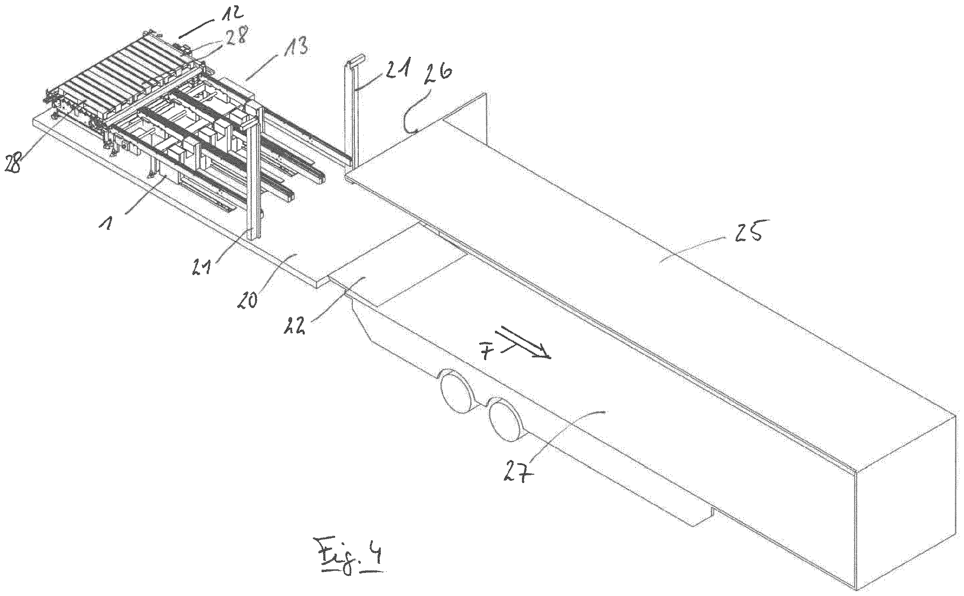

Die Figur 4 zeigt die oben bereits angedeutete Situation, in der ein Auflieger 25 einen Lkw mit einer Laderaumöffnung 26 an eine (nicht dargestellte) Rampe eines Lagergebäudes herangefahren wurde. Die Klappe 22 ist heruntergeklappt und liegt auf einem Laderaumboden 27 des Aufliegers 25 auf. Im Unterschied zu Fig. 3 wurde mit dem Beladevorgang bereits begonnen. Dazu wurden drei Paletten 28 auf den Rollenförderer 12 parallel nebeneinander aufgesetzt. Zur Ausrichtung in der Förderrichtung F können die Paletten 28 rückwärts gegen die Ausrichthilfe 16 gefahren werden. Die drei Paletten 28 bilden eine Reihe, die in den Laderaum des Aufliegers 25 befördert werden soll.

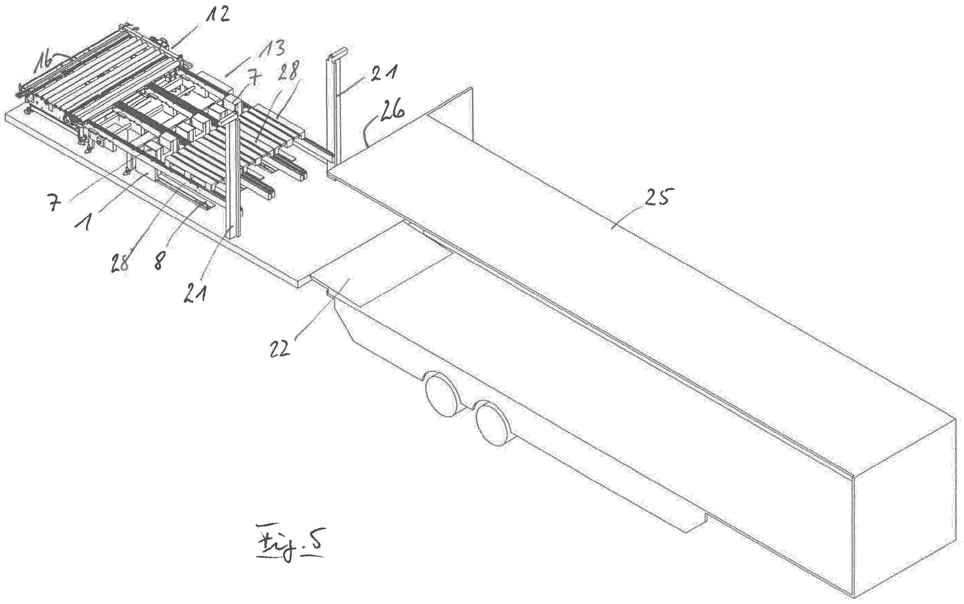

Der nächste Schritt ist in Figur 5 dargestellt. Hier sind die Paletten 28 zunächst von dem Rollenförderer 12 durch Antrieb der Rollen 14 auf den Kettenförderer 13 übergeben worden, auf dem jeweils eine Palette 28 wie oben beschrieben auf zwei beabstandeten Kettenförderern steht. Der Kettenförderer 13 wiederum hat die Paletten 28 in Förderrichtung F so weit befördert, dass sie über den Palettengabeleinheiten 8 des Förderfahrzeugs 1 stehen.

Die Positionierung der Paletten 28 auf dem Kettenförderer 13 erlaubt es nun, die Palettengabeleinheiten 8 des Förderfahrzeug 1 mittels der Hubeinheiten 7 anzuheben. Die Palettengabeleinheiten 8 sind, wie bei Hubwagen oder Gabelstaplern üblich, genau so breit, dass sie in entsprechende Freiräume an der Unterseite der Paletten 28 passen und dementsprechend auch zwischen die jeweils beanstandeten Kettenförderer, auf denen die Paletten 28 stehen.

Das Förderfahrzeug 1 kann also die Paletten 28 mittels der Palettengabeleinheiten 8 von den Kettenförderern 13a bis 13f abheben. Es trägt dann die Last der drei parallel ausgerichteten Paletten 28, die hier der besseren Übersichtlichkeit wegen ohne darauf befindliches Transportgut dargestellt sind.

Bevor das Förderfahrzeug 1 nun mit den von den Palettengabeleinheiten 8 getragenen Paletten 28 in Förderrichtung F autonom losfährt, wird von den Sensoren der Messsäulen 21 die Laderaumöffnung 26 vermessen und die genaue Position in Querrichtung und in Vertikalrichtung ermittelt. Diese Information wird an eine nicht dargestellte Steuerung des Förderfahrzeugs 1 übermittelt, das dann die Laderaumöffnung 26 gezielt ansteuern kann. Dazu sind die in Figur 1 dargestellten lenkbaren Antriebsrädern 4 vorgesehen, die das Förderfahrzeug 1 präzise in die Laderaumöffnung 26 steuern können.

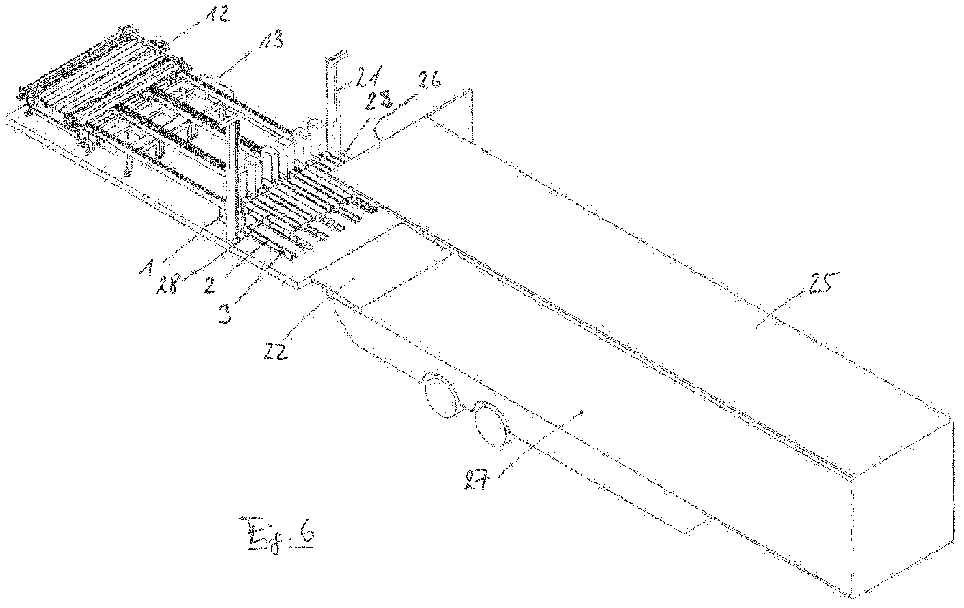

In der Figur 6 ist veranschaulicht, wie das Förderfahrzeug 1 mit den von den Kettenförderer 13 abgenommenen Paletten 28 in Richtung auf die Laderaumöffnung 26 verfährt. Die Palettengabeleinheiten 8 sind hier noch angehoben.

Vor dem Einfahren in die Laderaumöffnung 26 werden die Palettengabeleinheiten 8 abgesenkt, sodass auch Paletten, die bis zur vorgesehenen maximalen Höhe beladen sind, sicher in die Laderaumöffnung 26 eingefahren werden können, ohne an der Oberkante anzustoßen. Dabei werden die Palettengabeleinheiten 8 soweit abgesenkt, dass die Paletten noch nicht mit der Grundplatte 20, der Klappe 22 oder dem Laderaumboden 27 in Berührung kommen. Zur Positionierung und Navigation innerhalb des Laderaums sind die Sensoren 10 durch die Steuerung auslesbar. Im Allgemeinen wird das Förderfahrzeug 1 so navigieren, dass es mittig auf dem Laderaumboden 27 zwischen den Seitenwänden des Aufliegers 25 fährt.

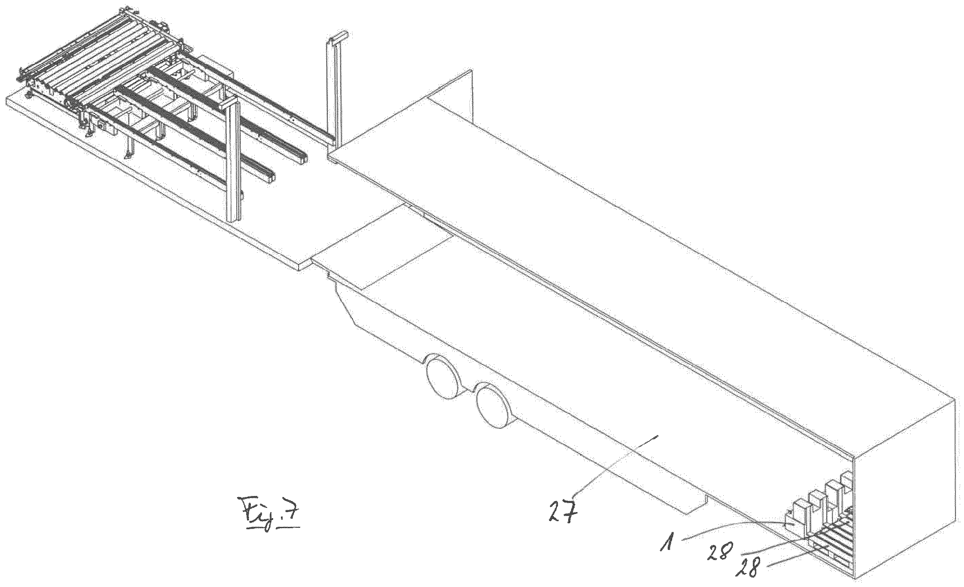

Mit abgesenkten Palettengabeleinheiten 8 kann nun das Förderfahrzeug 1 mitsamt den Paletten 28 in den Auflieger 25 hineinfahren, und zwar bis zu der in Figur 7 dargestellten Endposition, in der die Paletten 28 dann zum weiteren Transport abgestellt werden, indem die Palettengabeleinheiten 8 vollständig abgesenkt werden. Die Paletten 28 stehen dann auf dem Laderaumboden 27 auf. Das Förderfahrzeug 1 kann ohne die Paletten 28 selbsttätig entgegen der Förderrichtung F rückwärts in die Ausgangslage zurückfahren.

Sobald die Paletten 28 von dem Rollenförderer 12 auf den Kettenförderer 13 übergeben worden sind, also etwa ab der in Figur 5 veranschaulichten Stellung, können weitere Paletten auf dem Rollenförderer 12 abgesetzt werden, bis eine neue Reihe von drei Paletten gebildet ist. Mit dieser neuen Reihe von Paletten geht dann der zu den Figuren 4 bis 7 beschriebene Verladevorgang weiter, wobei das Förderfahrzeug 1 die neue Reihe Paletten auf dem Laderaumboden 27 des Aufliegers 25 in der Förderrichtung F unmittelbar hinter die dort bereits befindlichen Reihen von Paletten 28 stellt. Dies erfolgt so lange, bis alle Paletten abgearbeitet oder der Laderaum des Aufliegers 25 vollständig gefüllt ist.

Das Entladen eines beladenen Aufliegers 25 erfolgt sinngemäß in umgekehrter Reihenfolge. Das Förderfahrzeug 1 fährt dazu in den gefüllten Laderaum des Aufliegers 25, hebt jeweils eine Reihe von Paletten an und setzt diese auf dem Kettenförderer 13 ab, von dem aus dann die Paletten entgegen der Förderrichtung F auf den Rollenförderer 12 verfahren werden, wo sie von einem Gabelstapler abgenommen werden können.

Das Förderfahrzeug 1 kann über eine entsprechende elektrische Kupplung oder eine induktive Ladevorrichtung in der Ruhestellung, die in Figur 3 veranschaulicht ist, geladen werden, und zwar zwischen den jeweiligen Fahrten und insbesondere auch bei Wartezeiten zwischen 2 Verladevorgängen.

Es ist ersichtlich, dass das neue Verladesystem keine neuen Einbauten in dem Auflieger des Lkw oder in entsprechenden Wechselbrücken oder Containern erfordert, sondern auch mit Standardfahrzeugen genutzt werden kann. Weiter ist ersichtlich, dass der Platzbedarf im Lagergebäude im Rampenbereich deutlich geringer ist als bei Systemen, bei denen die gesamte Ladung von üblicherweise 11 x 3 Paletten auf einem Fördersystem positioniert und dann insgesamt in den Laderaum befördert werden muss.

## Patentansprüche

1. Verladesystem zum Beladen und Entladen von Laderäumen von Lkw, mit einer Anordnung von Kettenförderern (13), die parallel zueinander ausgerichtet sind und so angeordnet sind, dass Standardpaletten auf den Kettenförderern in einer Förderrichtung (F) hin und her bewegt werden können, **dadurch gekennzeichnet, dass** ein autonomes Förderfahrzeug (1) mit wenigstens einem lenkbaren Rad als Komponente des Verladesystems vorgesehen ist, und dass die Kettenförderer (13) in einer Höhe über einem Boden angeordnet sind, so dass unterhalb der Kettenförderer das Förderfahrzeug (1) mit vertikal verfahrbaren Palettengabeleinheiten (8) positionierbar ist.

2. Verladesystem nach Anspruch 1, **dadurch gekennzeichnet, dass** das Förderfahrzeug drei Palettengabeleinheiten (8) mit jeweils zwei parallelen und beabstandeten Palettengabeln aufweist.

3. Verladesystem nach Anspruch 1 oder 2, **dadurch gekennzeichnet, dass** insgesamt sechs parallele Kettenförderer (13a bis 13f) vorgesehen sind, von denen jeweils zwei benachbarte Kettenförderer (13a und 13b; 13c und 13d; 13e und 13f) einen Abstand von 0,5m bis 0,7m voneinander aufweisen.

4. Verladesystem nach einem der vorhergehenden Ansprüche, **dadurch gekennzeichnet, dass** in Förderrichtung (F) stromaufwärts vor dem Kettenförderer (13) ein Rollenförderer (12) mit Rollen (14) mit quer zu der Förderrichtung (F) ausgerichteten Drehachsen vorgesehen ist.

5. Verladesystem nach Anspruch 4, **dadurch gekennzeichnet, dass** der Rollenförderer (12) mit quer zu der Förderrichtung (F) arbeitenden Kettenförderern ausgestattet, die zum Umsetzen der Paletten auf dem Rollenförderer (12) eingerichtet sind.

6. Verladesystem nach einem der vorhergehenden Ansprüche 4 oder 5, **dadurch gekennzeichnet, dass** die Rollen (14) zumindest zum Teil bremsbar und antreibbar sind.

7. Verladesystem nach einem der vorhergehenden Ansprüche 4 bis 6, **dadurch gekennzeichnet, dass** eine Ausrichthilfe (16) parallel zu den Rollen (14) angeordnet ist.

8. Verladesystem nach einem der vorhergehenden Ansprüche, **dadurch gekennzeichnet, dass** Messsäulen (21) mit Sensoren zur Vermessung einer nicht zu dem Verladesystem gehörenden Laderaumöffnung vorgesehen sind.

9. Verladesystem nach einem der vorhergehenden Ansprüche, **dadurch gekennzeichnet, dass** das Förderfahrzeug (1) wenigstens einen Antrieb, wenigstens eine Hubeinheit und eine Steuerung aufweist.

10. Verladesystem nach einem der vorhergehenden Ansprüche, **dadurch gekennzeichnet, dass** das Förderfahrzeug (1) mit Sensoren (10) zur Navigation innerhalb eines Laderaums ausgestattet ist.

11. Verladesystem nach einem der vorhergehenden Ansprüche, **dadurch gekennzeichnet, dass** das Förderfahrzeug (1) einen Akkumulator zur Stromversorgung des Antriebs, der Hubeinheiten und der Steuerung aufweist, der mittels einer elektrischen Kupplung (11) oder induktiv in dem Verladesystem elektrisch aufgeladen werden kann.

12. Verladesystem nach einem der vorhergehenden Ansprüche, **dadurch gekennzeichnet, dass** das Förderfahrzeug (1) in einer Ruhestellung unterhalb der Kettenförderer (13) nicht über die Kettenförderer (13) hinausragt.

13. Verladesystem nach einem der vorhergehenden Ansprüche 4 bis 7, **dadurch gekennzeichnet, dass** der Boden von einer Grundplatte (20) gebildet ist, auf der zumindest der Rollenförderer (12) und der Kettenförderer (13) montiert sind.

14. Verladesystem nach Anspruch 13, **dadurch gekennzeichnet, dass** die Grundplatte (20) auf Rollen oder auf einem Schienensystem quer zu der Förderrichtung (F) verfahrbar gelagert ist.

## Claims

1. Loading system for loading and unloading loading spaces of trucks, having an arrangement of chain conveyors (13) which are aligned parallel to one another and are arranged such that standard pallets can be moved back and forth on the chain conveyors in a conveying direction (F), **characterized in that in that** an autonomous conveyor vehicle (1) with at least one steerable wheel is provided as a component of the loading system, and **in that** the chain conveyors (13) are arranged at a height above a floor, so that the conveyor vehicle (1) with vertically movable pallet fork units (8) can be positioned below the chain conveyors.

2. Loading system according to claim 1, **characterized in that** the conveyor vehicle has three pallet fork units (8), each with two parallel and spaced pallet forks.

3. Loading system according to claim 1 or 2, **characterized in that** a total of six parallel chain conveyors (13a to 13f) are provided, of which in each case two adjacent chain conveyors (13a and 13b; 13c and 13d; 13e and 13f) are at a distance of 0.5 m to 0.7 m from one another.

4. Loading system according to one of the preceding claims, **characterized in that** a roller conveyor (12) with rollers (14) with axes of rotation aligned transversely to the conveying direction (F) is provided upstream of the chain conveyor (13) in the conveying direction (F).

5. Loading system according to claim 4, **characterized in that** the roller conveyor (12) is equipped with chain conveyors which operate transversely to the conveying direction (F) and are set up for displacing the pallets on the roller conveyor (12).

6. Loading system according to claim 4 or 5, **characterized in that** the rollers (14) are at least partially brakable and drivable.

7. Loading system according to one of the preceding claims 4 to 6, **characterized in that** an alignment aid (16) is arranged parallel to the rollers (14).

8. Loading system according to one of the preceding claims, **characterized in that** measuring columns (21) with sensors are provided for measuring a loading space opening not belonging to the loading system.

9. Loading system according to one of the preceding claims, **characterized in that** the conveyor vehicle (1) has at least one drive, at least one lifting unit and a control system.

10. Loading system according to one of the preceding claims, **characterized in that** the conveyor vehicle (1) is equipped with sensors (10) for navigation within a loading space.

11. Loading system according to one of the preceding claims, **characterized in that** the conveyor vehicle (1) has an accumulator for supplying power to the drive, the lifting units and the control system, which can be electrically charged by means of an electric coupling (11) or inductively in the loading system.

12. Loading system according to one of the preceding claims, **characterized in that** the conveyor vehicle (1) does not project beyond the chain conveyors (13) in a rest position below the chain conveyors (13).

13. Loading system according to one of the preceding claims 4 to 7, **characterized in that** the floor is formed by a base plate (20) on which at least the roller conveyor (12) and the chain conveyor (13) are mounted.

14. Loading system according to claim 13, **characterized in that** the base plate (20) is mounted on rollers or on a rail system so as to be movable transversely to the conveying direction (F).

## Revendications

1. Système de chargement conçu pour charger et décharger des espaces de chargement de poids lourds, muni d'un agencement de convoyeurs (13) à chaînes orientés parallèlement les uns aux autres et disposés de façon telle que des palettes normalisées puissent être animées de mouvements alternatifs sur lesdits convoyeurs à chaînes, dans une direction de convoyage (F), **caractérisé par** la présence d'un véhicule autonome de convoyage (1), doté d'au moins une roue braquable en tant qu'élément constitutif dudit système de chargement ; et par le fait que les convoyeurs (13) à chaînes sont disposés en hauteur au-dessus d'un sol, de telle sorte que ledit véhicule de convoyage (1), équipé d'unités (8) à fourches de palettisation mobiles verticalement, puisse être positionné au-dessous desdits convoyeurs à chaînes.

2. Système de chargement selon la revendication 1, **caractérisé par le fait que** le véhicule de convoyage compte trois unités (8) à fourches de palettisation pourvues, à chaque fois, de deux fourches de palettisation parallèles et espacées.

3. Système de chargement selon la revendication 1 ou 2, **caractérisé par** la présence de convoyeurs parallèles (13a à 13f) à chaînes, au nombre total de six, au sein desquels deux convoyeurs (13a et 13b ; 13c et 13d ; 13e et 13f) à chaînes, respectivement voisins, sont espacés l'un de l'autre d'une distance de 0,5 m à 0,7 m.

4. Système de chargement selon l'une des revendications précédentes, **caractérisé par le fait qu'**un convoyeur (12) à rouleaux, nanti de rouleaux (14) à axes de rotation orientés transversalement par rapport à la direction (F) du convoyage, est prévu en amont du convoyeur (13) à chaîne dans ladite direction (F) du convoyage.

5. Système de chargement selon la revendication 4, **caractérisé par le fait que** le convoyeur (12) à rouleaux est équipé de convoyeurs à chaînes qui, fonctionnant transversalement par rapport à la direction (F) du convoyage, sont agencés en vue du transfert des palettes sur ledit convoyeur (12) à rouleaux.

6. Système de chargement selon l'une des revendications 4 ou 5 précédentes, **caractérisé par le fait que** les rouleaux (14) peuvent être freinés et entraînés, au moins partiellement.

7. Système de chargement selon l'une des revendications 4 à 6 précédentes, **caractérisé par le fait qu'**un auxiliaire d'orientation (16) est disposé parallèlement aux rouleaux (14).

8. Système de chargement selon l'une des revendications précédentes, **caractérisé par le fait que** des colonnes de mesure (21), dotées de capteurs, sont prévues pour mesurer une ouverture d'espace de chargement ne faisant pas partie intégrante dudit système de chargement.

9. Système de chargement selon l'une des revendications précédentes, **caractérisé par le fait que** le véhicule de convoyage (1) comporte au moins un entraînement, au moins une unité de levage et une commande.

10. Système de chargement selon l'une des revendications précédentes, **caractérisé par le fait que** le véhicule de convoyage (1) est équipé de capteurs (10), en vue de la navigation à l'intérieur d'un espace de chargement.

11. Système de chargement selon l'une des revendications précédentes, **caractérisé par le fait que** le véhicule de convoyage (1) comporte un accumulateur qui, affecté à l'alimentation en courant de l'entraînement, des unités de levage et de la commande, peut être chargé électriquement, dans ledit système de chargement, par induction ou au moyen d'un accouplement électrique (11).

12. Système de chargement selon l'une des revendications précédentes, **caractérisé par le fait que** le véhicule de convoyage (1) ne fait pas saillie au-delà des convoyeurs (13) à chaînes dans une position de repos située au-dessous desdits convoyeurs (13) à chaînes.

13. Système de chargement selon l'une des revendications 4 à 7 précédentes, **caractérisé par le fait que** le sol est matérialisé par une plaque de base (20) sur laquelle au moins le convoyeur (12) à rouleaux et le convoyeur (13) à chaîne sont montés.

14. Système de chargement selon la revendication 13, **caractérisé par le fait que** la plaque de base (20) est montée sur des rouleaux ou sur un système de rails, avec faculté de mouvement transversalement par rapport à la direction (F) du convoyage.
